# EUROPEAN PATENT APPLICATION

(11) **EP 1 124 366 A2**
(43) Date of publication of application: **16.08.2001**
(21) Application number: 01102971.7
(22) Date of filing: 08.02.2001
(51) Int. Cl.: H04M 3/487

(54) **Free or discounted call service according to watching of advertisement**

(30) Priority: 08.02.2000 KR 2000005750; 19.02.2000 KR 2000007994; 23.03.2000 KR 2000014770
(71) Applicant: Kovecom Co., Ltd., Gangnam-gu, Seoul (KR); Kwon, Hwang-Sub, Seoul (KR)
(72) Inventor: Kwon,Hwang-Sub, 5/4 615 llwon-dong,Gangnam-du, Seoul (KR)
(74) Representative: Harrison Goddard Foote

(57) **Abstract**

Disclosed is an advertising method using a public telephone and a system for providing free or discounted call service according to watching of advertisement. A public telephone, a relay server, a communication line provider, an advertiser server and an Internet information server are connected through a communication network together. The relay server receives advertisement information from the advertiser server or the Internet information server and displays advertisement information through a display device of the public telephone for advertisement. The public telephone periodically downloads renewed advertisement information from the relay server to renew it. A user is benefited by free-call or discounted-call service depending on seeing and hearing of advertisement over given number. The multifunctional public telephone, which is installed at an unspecified location and displays advertisement, provides advertising effect of high level in low price to advertisers.

## Description

### BACKGROUND OF THE INVENTION

### Field of the Invention

The present invention relates to an advertising method and a system for providing advertisement and telephone-call service using a public telephone. More particularly, the present invention relates to an advertising method, which displays previously stored various advertisement information through a large screen-sized display device mounted in the public telephone and, at the same time, downloads at any time new advertisement information from a remote server to renew advertisement information, and to a system for providing advertisement and telephone-call service using the public telephone, which provides free-call or discounted call service according to seeing and hearing of advertisement provided from the public telephone.

### Background Art

There is a telephone set as the most representative device for communication. The telephone set is divided into a general telephone and a public telephone according to the purpose of use. However, typical public telephones are restricted to a general communication function.

Therefore, the typical public telephone has its effective value only when being engaged, because it is waiting for telephone-call without any function when the telephone-call is not performed.

However, the typical public telephone has a problem in that it has no effective value when telephone-call is not performed.

To solve the above problem, "a multifunctional public telephone" is disclosed in Korean Patent Application No. 99-65769 filed on December 30, 1999 and invented by the same inventor as the present invention. The multifunctional public telephone makes a user conveniently use an office automation (OA) device outside of the office using the public telephone. The public telephone has a large screen-sized display device to display various guide words related to communication function.

Especially, like the multifunctional public telephone by the same inventor as the present invention, recent public telephones are on the trend to adopt the large screen-sized display device. However, the display device is restricted to a simple guide of telephone function in the contents displayed on the display device, thereby having a reduced efficiency of the large screen-sized display device.

Furthermore, advertising culture occupies a large part of the present society. However, if a broadcasting medium or a large-sized advertising board is used for advertisement, it is too heavy a burden for advertisers. To watch the advertisement, a receiver or the large-sized advertising board for receiving the advertisement through the broadcasting medium must be installed. As people can watch only in the place where the receiver or the large-sized advertising board is installed, it is restricted in effectiveness of advertising.

### SUMMARY OF THE INVENTION

It is, therefore, an object of the present invention to provide an advertising method using a public telephone, which is capable of displaying advertisement through a display device of a public telephone installed in unspecified location and which is capable of periodically downloading advertisement information in a preset regular period of time by communicating with a server through a communication line to renew and store the advertisement information, so that advertisement can be simply and timely renewed at need.

It is another object of the present invention to provide an advertising method using a public telephone, which is capable of sensing of people's approach and separation and automatically converting telephone mode into advertisement mode or to the contrary.

It is a further object of the present invention to provide an advertising method using a public telephone, which provides free-call service or discounted-call service according to seeing and hearing of advertisement.

To achieve the above objects, the present invention provides an advertising method using a public telephone, which connects to a relay server through a communication network and downloads advertisement information from the relay server to perform display of advertisement, the method comprising: a step of checking standard time that counts a waiting period of time of the public telephone and checks whether or not the counted time exceeds a preset standard time; a step of performing telephone mode that, if telephone mode is sensed during the standard time checking step, detects a predetermined guide information concerning the telephone mode, displays the guide information on a display device of the public telephone and, at the same time, converts into the telephone mode to perform telephone function; a step of performing advertisement mode that, as the result of the standard time checking step, if telephone mode is not sensed until the counted time exceeds the standard period of time, detects predetermined advertisement information previously stored and displays it on the display device; and a step of converting to telephone mode that, if the telephone mode is sensed during the advertisement mode performing step, removes the advertisement mode, displays the guide information concerning the telephone mode and, at the same time, converts to the telephone mode.

According to another aspect of the present invention, the present invention provides an advertising method using a public telephone, which connects to a relay server through a communication network and downloads advertisement information from the relay server in a predetermined period of time to perform display of advertisement, the method comprising: a step of counting the predetermined period of time and checking whether the counted time exceeds a preset standard time; a step of connecting the public telephone through the communication network to the relay server if the counted time exceeds the standard time; a step of checking whether renewed advertisement information exists in the relay server; and a step of replacing advertisement information previously stored in the public telephone with renewed advertisement information if renewed advertisement information exists in the relay server.

Preferably, the relay server is connected to an Internet information server or an advertiser server and provided advertisement information from the Internet information server or the advertiser server.

Additionally, the present invention further comprises: a step of checking standard time that counts a waiting period of time of the public telephone and checks whether or not the counted time exceeds a preset standard time; a step of performing telephone mode that, if telephone mode is sensed during standard time checking step, detects a predetermined guide information concerning the telephone mode, displays the guide information on a display device of the public telephone and, at the same time, converts to the telephone mode to perform telephone function; a step of performing advertisement mode that, as the result of the standard period of time checking step, if telephone mode is not sensed until the counted time exceeds the standard period of time, detects predetermined advertisement information previously stored and displays it on the display device; and a step of converting to telephone mode that, if the telephone mode is sensed during the advertisement mode performing step, removes the advertisement mode, displays the guide information concerning the telephone mode and, at the same time, converts into the telephone mode.

According to a further aspect of the present invention, the present invention provides an advertising method using a public telephone, which connects to a relay server through a communication network, downloads advertisement information from the relay server to perform display of advertisement, the public telephone being installed at an unspecified location and having a sensor for sensing a user being within a sensing range, the method comprising: a step of checking standard time that counts a waiting period of time of the public telephone and checks whether or not the counted time exceeds a preset standard time; a step of performing telephone mode that, if telephone mode is sensed during standard time checking step, detects a predetermined guide information concerning the telephone mode, displays the guide information on a display device of the public telephone and, at the same time, converts to the telephone mode to perform telephone function; a step of performing advertisement mode that, as the result of the standard period of time checking step, if telephone mode is not sensed until the counted time exceeds the standard period of time, detects predetermined advertisement information previously stored and displays it on the display device; a step of converting to telephone mode that, if the telephone mode is sensed during the advertisement mode performing step, removes the advertisement mode, displays the guide information concerning the telephone mode and, at the same time, converts into the telephone mode; and a step of converting to initial mode that, if the sensor senses the user's approaching during the advertisement mode performing step, removes the advertisement mode and initializes to display an initial screen previously set in the display device.

Preferably, the initial screen mode is in a state that various service modes provided from the public telephone is displayed on the display device.

According to still another aspect of the present invention, the present invention provides an advertising method using a public telephone, which connects to a relay server through a communication network, downloads advertisement information from the relay server to perform display of advertisement, the public telephone being installed at an unspecified location and having a sensor for sensing a user being within a sensing range, the method comprising: a step of performing telephone mode if the telephone mode is sensed; a step of checking through the sensor whether or not the user is separated from the public telephone; a step of counting period of time from the time of the user's separation if the user is separated from the public telephone and checking whether or not the counted time exceeds a preset standard time; a step of performing advertisement mode that, if the counted time exceeds the standard time, detects previously stored advertisement information and displays it on a display device of the public telephone; and a step of converting that, if the telephone mode is sensed during the advertisement mode, removes the advertisement mode and converts to an operation state corresponding to the telephone mode.

According to a still further aspect of the present invention, the present invention provides a system for providing advertisement and call service using a public telephone, in which a public telephone terminal, a relay server storing advertisement information including advertiser name, an advertiser server and an Internet information server for providing advertisement information to the relay server and communication line provider providing a communication network to the relay server according to a contract of line use with the relay server are connected together through a communication line, wherein the public telephone terminal comprising: means for downloading and displaying a number of advertiser names registered in the relay server if a request signal of free-call is requested by a user; means for counting the selected number of each advertiser name if the user selects the advertiser names over predetermined number of the plurality of advertiser names displayed on the advertiser display means, cumulatively calculating and, at the same time, detecting and displaying the previously registered advertisement information corresponding to the selected advertiser names; and means for providing call service if the advertiser names over the predetermined number are selected.

Preferably, the relay server includes: an advertisement information transmission unit for transmitting advertisement information provided from the advertiser server to the public telephone terminal; an advertisement information sorting unit for sorting advertisement information provided from the advertiser server into advertiser list, fixed advertisement information and selected advertisement information and storing them in an advertiser list DB, a fixed ad data DB and a selected ad data DB respectively; a cumulative computing unit for accumulating information of the seeing and hearing number of advertisement provided from the public telephone terminal and calculating total seeing and hearing number of advertisement; an accounting unit for calculating claimed amount of advertising costs corresponding to the computed seeing and hearing number; a billing unit for demanding the claimed amount by advertisement, which is calculated by the accounting unit, to the advertiser server or the Internet information server; and a central processing unit for controlling all the units, wherein the central processing unit including the steps of: dividing advertisement information provided from the advertiser server into fixed advertisement and selected advertisement; contracting and demanding utility fee in a specified period of time unit in connection with the fixed advertisement; and contracting and demanding claimed amount by unit according to the seeing and hearing number of advertisement corresponding to the selected advertiser list of various advertiser lists displayed on the public telephone terminal in connection with the selected advertisement; and wherein the accounting unit, after multiplying the claimed amount by unit according to the seeing and hearing number of the corresponding advertisement, demands amount of money adding contracted payment of fixed advertisement.

### BRIEF DESCRIPTION OF THE DRAWINGS

Further objects and advantages of the invention can be more fully understood from the following detailed description taken in conjunction with the accompanying drawings in which:
Fig. 1 is a perspective view of an external appearance of a multifunctional public telephone having a large-sized display device;
Fig. 2 is a perspective view of a system construction for explaining conception of the present invention;
Fig. 3 is a schematic diagram of the multifunctional public telephone applied to a first preferred embodiment according to the present invention;
Figs. 4 and 5 are flow charts showing a process for controlling display state of the public telephone of the first preferred embodiment according to the present invention;
Fig. 6 is a block diagram of the public telephone applied to second and third preferred embodiments according to the present invention;
Fig. 7 is a flow chart showing a process for converting mode of the public telephone by the second preferred embodiment;
Fig. 8 is a flow chart showing a process for converting mode of the public telephone by the third preferred embodiment;
Fig. 9 is a schematic diagram of a common carrier server according to a fourth preferred embodiment of the present invention;
Fig. 10 is a flow chart showing a process of contract of the common carrier according to the fourth preferred embodiment;
Fig. 11a is a flow chart showing a process for providing discounted-call service according to the fourth preferred embodiment;
Fig. 11b is a flow chart showing a process for providing free-call service according to the fourth preferred embodiment;
Figs. 12a to 12h are views showing display state of a liquid crystal display device of the public telephone applied to the present invention; wherein
Fig. 12a is a view of a display state of an initial screen;

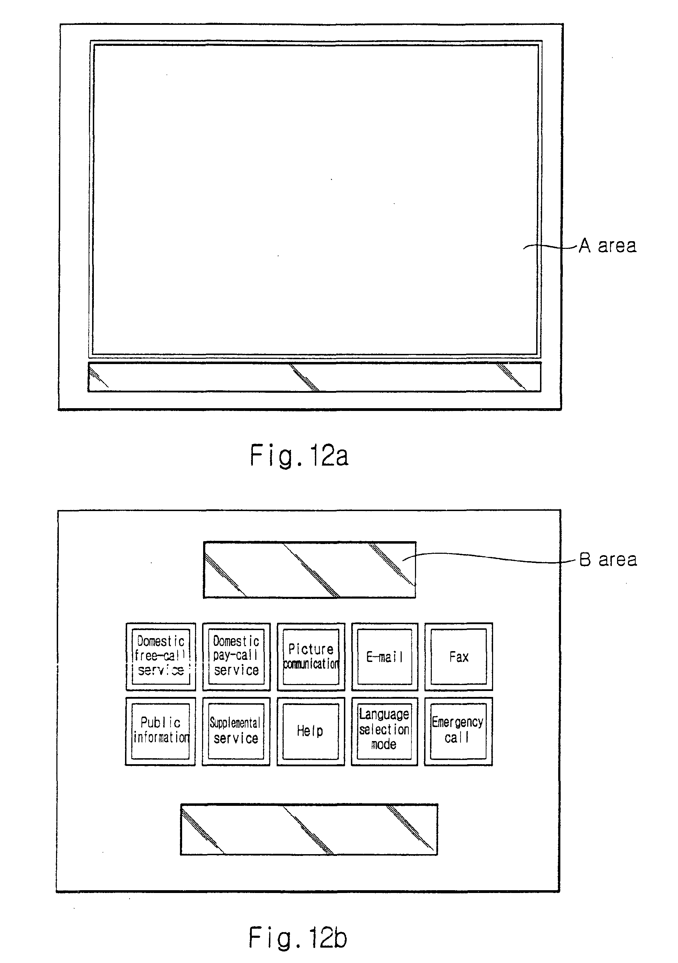

Fig. 12b is a view showing a display state of a service selection screen;

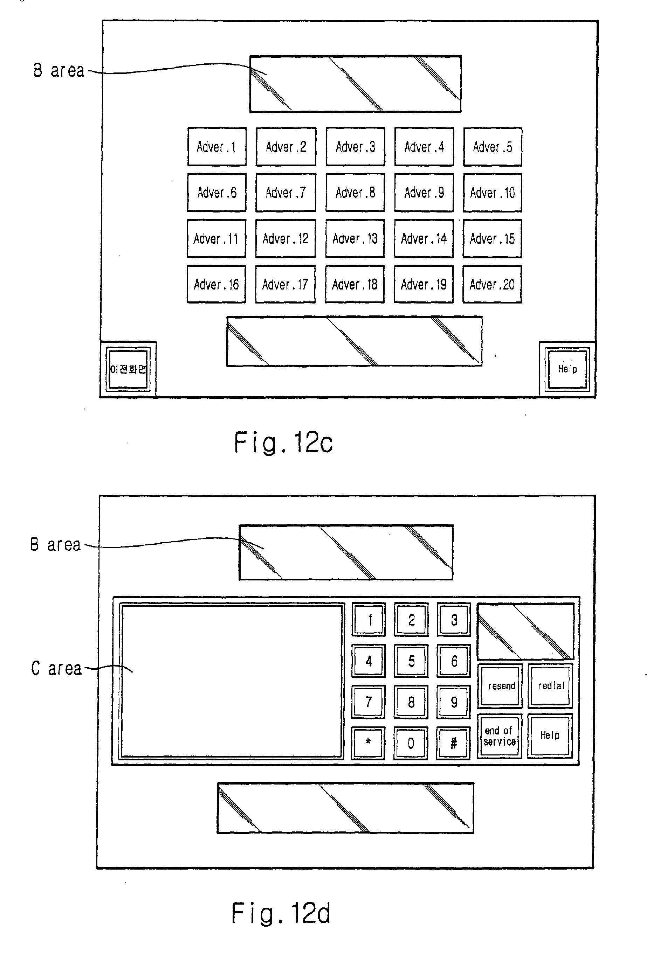

Fig. 12c is a view showing a display state of an advertiser selection screen;
Fig. 12d is a view showing a display state of domestic free-call service and international pay-call service;

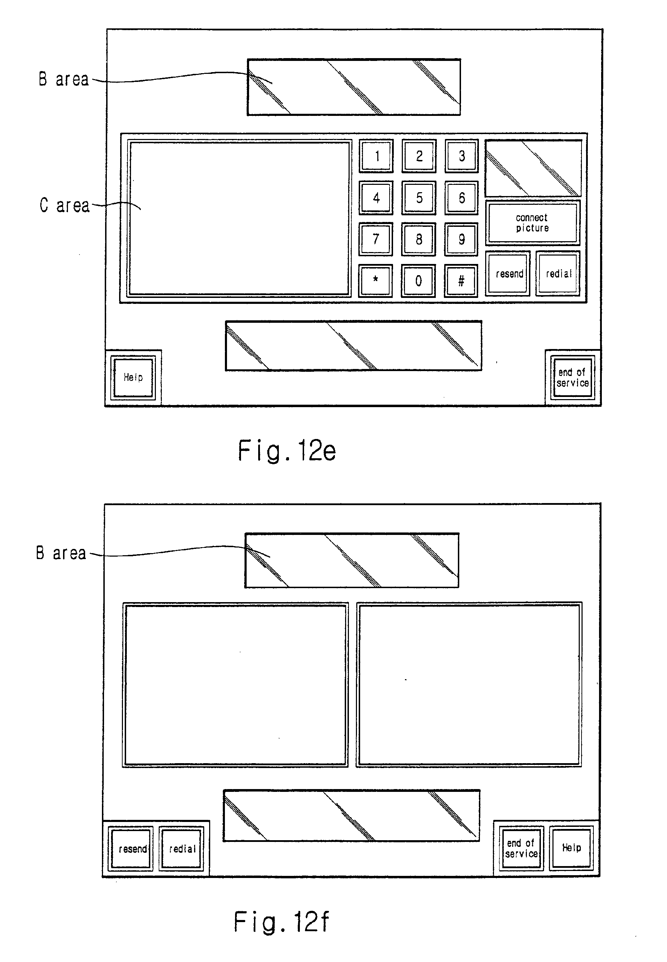

Figs. 12e and 12f are views showing a display state of picture communication; and

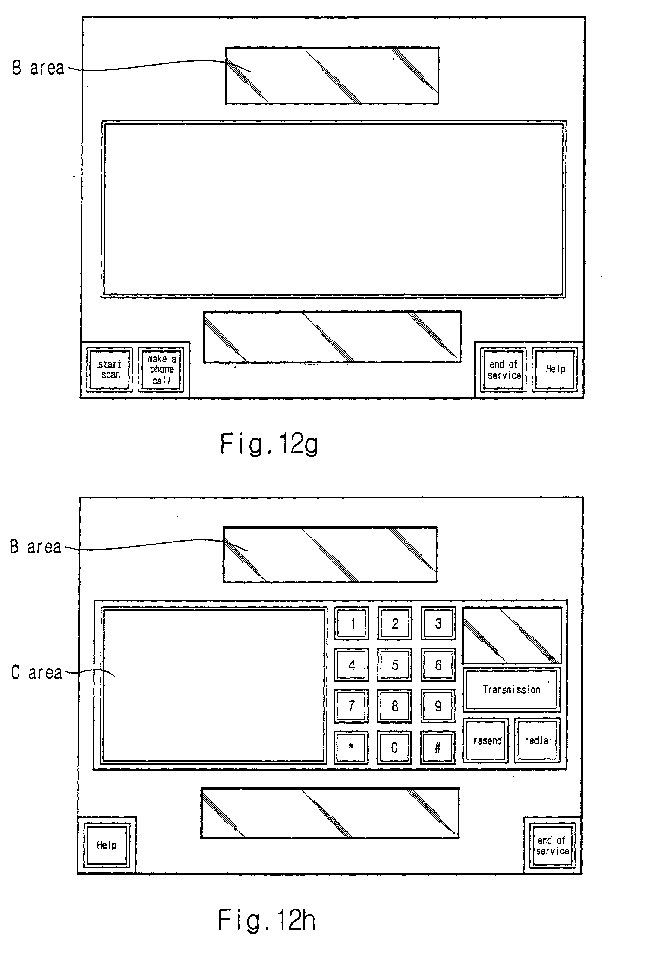

Figs. 12g and 12h are view showing a display state of facsimile transmission.

### DETAILED DESCRIPTION OF THE PREFERRED EMBODIMENT

The present invention will now be described in connection with preferred embodiments with reference to the accompanying drawings. For reference, like reference characters designate corresponding parts throughout several views.

### Embodiment 1

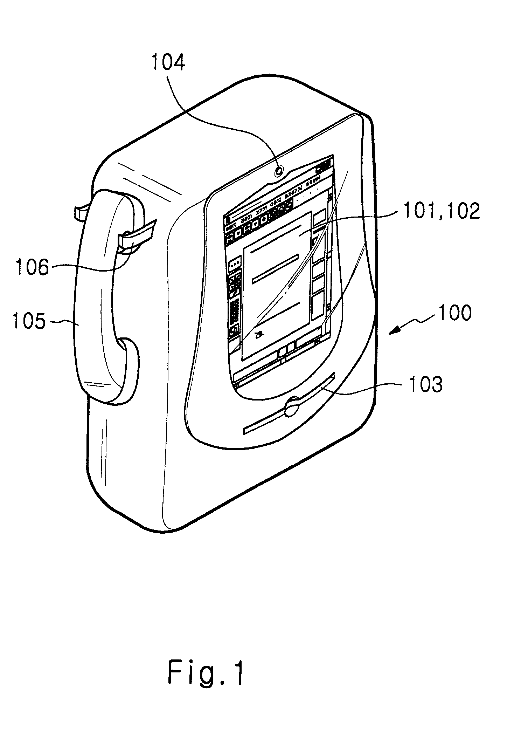

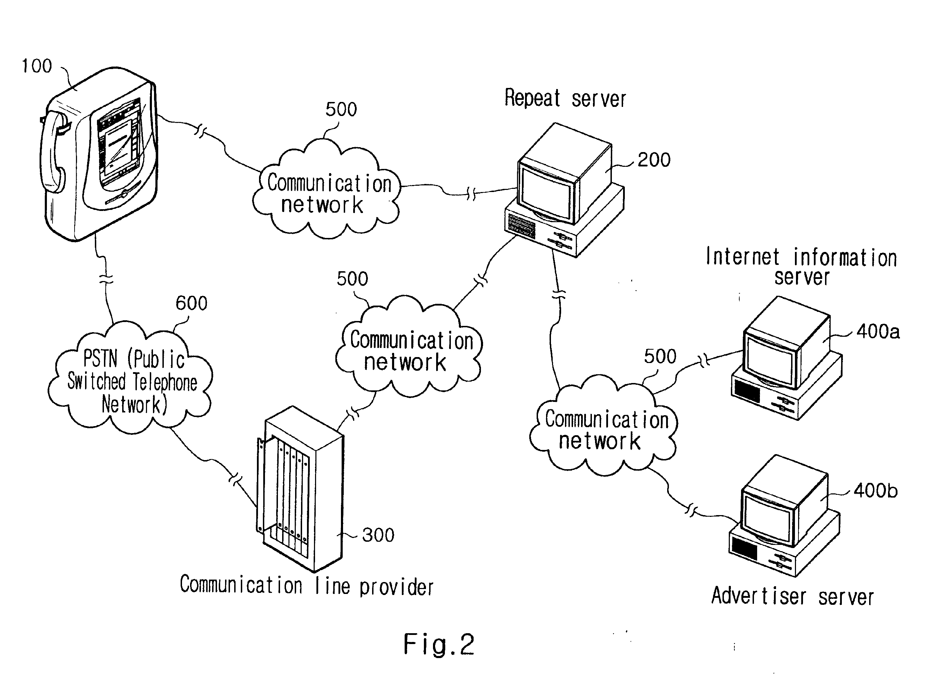

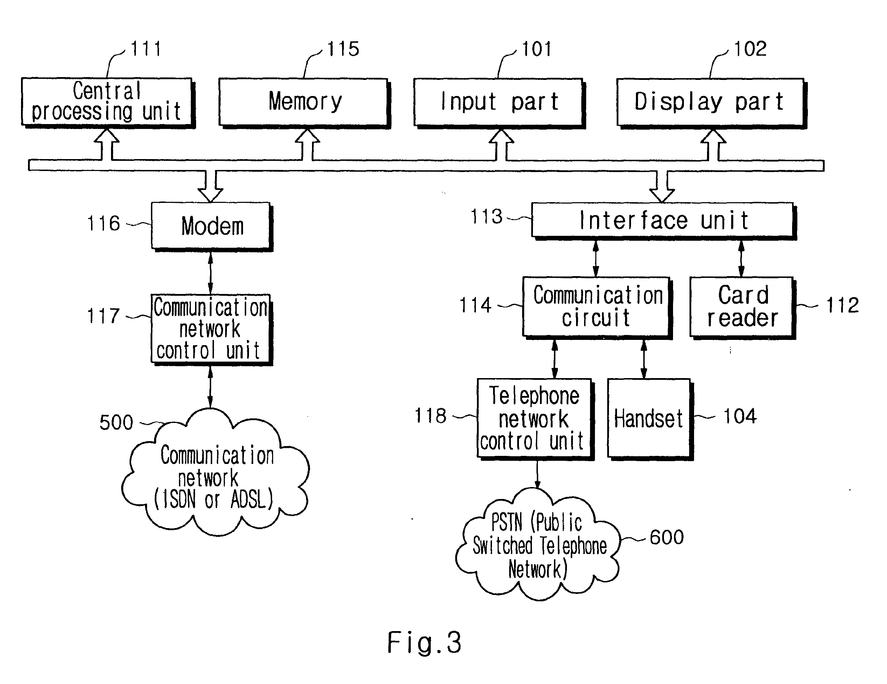

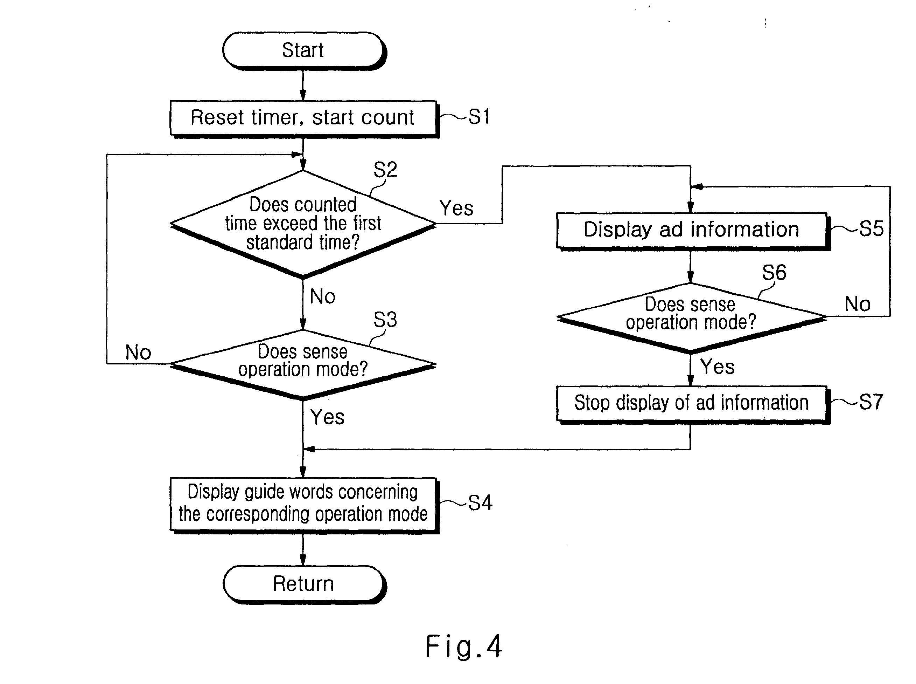

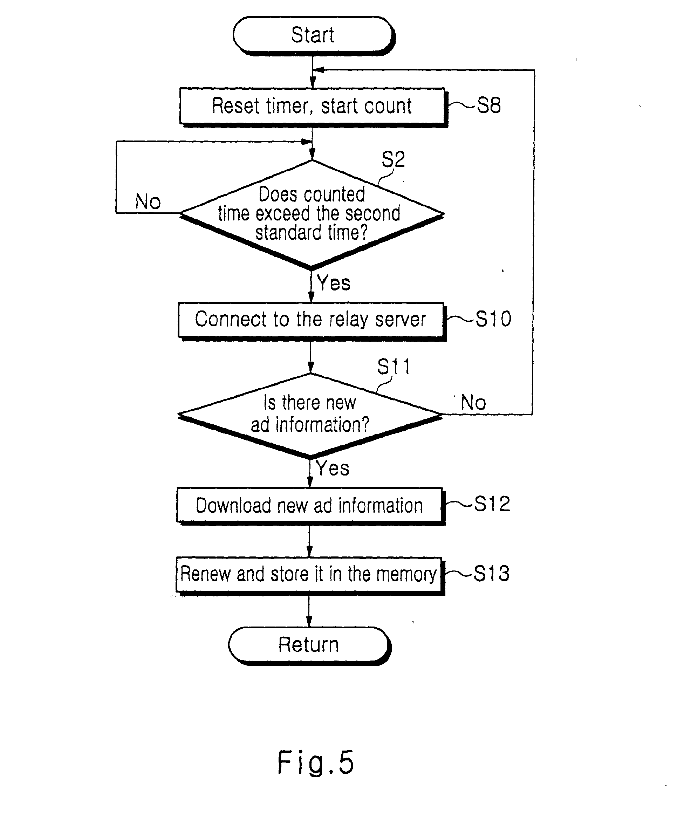

Fig. 1 is a perspective view of an external appearance of a multifunctional public telephone having a large-sized display device applied to the present invention. Fig. 2 illustrates a system construction for explanation of conception according to a first preferred embodiment of the present invention. Fig. 3 is a schematic block diagram of the multifunctional public telephone applied to the first preferred embodiment. Figs. 4 and 5 are flow charts showing a process for controlling display state of the public telephone according to the first preferred embodiment.

First, referring now to Figs. 1 to 3, the construction of the present invention according to the first preferred embodiment will be described hereinafter as follows.

The public telephone 100 includes an input part 101 and a display part 102, which are installed at a front portion of a telephone body, for performing an input function and a display function at the same time and a card inlet 103 formed at a lower portion of the body to allow insertion of a telephone card.

The public telephone 100 has a hook 105 formed at a side surface of the telephone body to allow a handset 104 to be hung.

As shown in Fig. 2, the public telephone 100 is connected to a central office switching system 300 of an operator through PSTN (Public Switched Telephone Network) 600. Also, the public telephone 100 is connected to a remote relay server 200 through a communication network (ISDN (Integrated Service Digital Network) or an ADSL (Asymmetric Digital Subscriber Line)) 500. The relay server 200 is connected to an Internet information server 400a or an advertiser server 400b to download and store, at any time, new advertisement information provided from the Internet information server 400a or the advertiser server 400b. Alternatively, the advertisement information may be directly provided in the form of CD-ROM by the advertiser and stored.

Referring to Fig. 3, the internal construction of the public telephone 100 is described hereinafter as follows. A central processing unit 111 generally controls each part of the public telephone 100 according to predetermined program.

The input part 101 judges an input state selected by a user's manipulation and transmits its result to the central processing unit 111.

The display part 102 displays various information of operation state and guide words related to the present operation of the public telephone 100, and particularly, displays ad data downloaded from the relay server 200.

A card reader 112 checks whether or not a card inserted into the public telephone 100 is available. The card reader 112 calculates the charged amount of the card according to the use of the public telephone 100 or detects necessary information from the inserted card to transmit information of the used amount of the card to an accounting server to charge the amount of money later.

An interface unit 113 controls various operations of the card reader 112 and the communication circuit 114 and interfaces input/output state of various data. In other words, the interface unit 113 judges based on information of the card detected by the card reader 112 whether or not the corresponding card is available. As the result of judge, if it is judged that the card is available, the interface unit 113 transmits the judged result to the central processing unit 111 to form a communication line.

Furthermore, the interface unit 113 detects intrinsic identifier information of the card inserted into the card reader 112 and transmits it to central processing unit 111. After that, the interface unit 113 controls various operations concerning the card, for example, adjusting balance information stored in the card as much as money is used and recording new amount of money. The interface unit 113 controls loop on/off state of the PSTN 600 through the communication circuit 114 and controls DTMF (Dual Tone Multi Frequency) generator inside the communication circuit 114 to generate DTMF signal corresponding to telephone number.

A memory 115 stores various program data to be performed by the central processing unit 111 and stores various display information, for example information related to advertisement and guide words, to be displayed on the display part 102.

Moreover, the memory 115 renews and stores ad data downloaded from the relay server 200 connected through the public telephone 100.

When the public telephone 100 is connected to the relay server 200 through the communication network (ISDN or ADSL) 500, a modem 116 receives ad data provided from the relay server 200 and performs demodulation working such as error correction. Additionally, if the user's card is a credit card, the modem 116 transmits information of the corresponding card to the accounting server. The modem 116 receives information of the judged result of whether or not the card is available and provides the central processing unit 111 with it.

A communication network control unit 117 interfaces the modem 116 and the communication network 500.

The communication circuit 114 includes a communication control unit for allowing a general call service of the public telephone 100, a DTMF signal generator, a modulation/demodulation unit and a line matching unit.

A telephone network control unit 118 interfaces communication between the public telephone 100 and the PSTN 600.

The handset 104 resonates the user's voice with a microphone to provide to the communication circuit 114, and at the same time, outputs the party's voice signal received from the PSTN 600 to a speaker to make the user distinguish it.

Referring to Figs. 4 and 5, the operation of this embodiment will now be described hereinafter.

First, the central processing unit 111 and the interface unit 113 communicates various information and control signals according to a predetermined protocol. That is, when the central processing unit 111 transmits request signal related to various information, the interface unit 113 transmits response signal corresponding to the request signal. At this time, the request signal consists of STX (Start of Text) of 1 byte, request command of several bytes, data of several bytes, ETX (End of Text) of 1 byte, LRC (Longitudinal Redundancy Check: horizontal Redundancy Check) and CR (Carriage Return) of 1 byte that indicates end of request signal block.

Furthermore, block of the response signal consists of data of several byte and FS (File Separator) of 1 byte connected to each data. Such construction of protocol block is applied to all of protocols in the same way. As it is identical with protocol in a typical public telephone, its detailed description will be omitted.

Referring to Fig. 4, a process for displaying various guide words and advertisement information on the public telephone 100 will now be described as follows. Initially, after resetting a timer, the central processing unit 111 starts count (Step S1).

After that, the central processing unit 111 checks whether or not the counted time by the timer exceeds a preset standard time (Step S2). If it is judged that the counted time does not exceed the standard time, the central processing unit 111 checks whether or not telephone mode is sensed (Step S3). Here, the standard time means a period of time that the public telephone waits without performing telephone function. Additionally, telephone mode means mode that, by the user separating the handset 104 from the hook 105 or inserting the card into the telephone to use the telephone function of the public telephone 100, the public telephone 100 is in a used state.

In the step S3, if telephone mode is sensed, the central processing unit 111 controls the display part 102, detects guide words concerning the present telephone mode stored in the memory 115, and then, displays the guide words on the display part 102 (Step 54).

In the step S2, if it is judged that the counted time by the timer exceeds the standard time, the central processing unit 111 detects advertisement information stored in the memory 115, controls the display part 102, and then, performs advertisement mode for displaying the detected advertisement information (Step S5).

Meanwhile, if the telephone mode of the public telephone is sensed by the user raising the handset or inserting the card to use the telephone function while the advertisement mode displaying advertisement information is performed (Step S6), the central processing unit 111 removes the display state of advertisement information displayed now (Step S7), returns to the step S4, displays guide words concerning the corresponding telephone mode, and returns to the step S1. After that, the above steps are performed repeatedly.

Referring to Fig. 5, a process for downloading new advertisement information to the public telephone 100 will now be described as follows.

The central processing unit 111 starts count after resetting the timer (S8). At this time, the counted time by the timer is counted without regard to count of the standard time. Therefore, the public telephone 100 according to this embodiment has two timers and it is simply constructed by the central processing unit 111 and a RTC (Real Time Clock). Therefore, detailed description will be omitted.

If the counted time by the timer exceeds the preset standard time (Step S9), the central processing unit 111 controls the modem 116 and the communication network control unit 117 and connects the public telephone 100 with the communication network 500. The public telephone 100 is connected to the relay server 200 (Step S10). Here, the standard time means time that corresponds to the period to renew advertisement provided from the Internet information server or the advertiser server to the public telephone. If necessary, the standard time may be set in hour unit, day unit or week unit. After that, the central processing unit 111 checks whether or not new advertisement information downloaded from the Internet information server 400a or the advertiser server 400b exist in the relay server 200 (Step S11). If it is judged that new advertisement information does not exist, the central processing unit 111 returns to the Step S8 and performs all steps after the Step S8.

Meanwhile, if it is judged that new advertisement information exists in the relay server 200, the central processing unit 111 controls the modem 116 and the communication network control unit 117 and downloads new advertisement information existing in the relay server 200 to the memory 115 to renew and store it (Steps S12 and S13).

At this time, if there are a plurality of servers to download advertisement information from the relay server 200, for example, if there are a plurality of the Internet information servers 400a and a plurality of advertiser servers 400b, the relay server 200 prioritizes servers 400a and 400b, and then, downloads advertisement information from the server having the first priority.

After that, the relay server 200 repeatedly performs the above process from the server having the next priority to the server having the last priority. Therefore, advertisement information of unspecified advertisers can be displayed through the public telephone 100 and renewed in a new version in a regular period of time.

### Embodiment 2

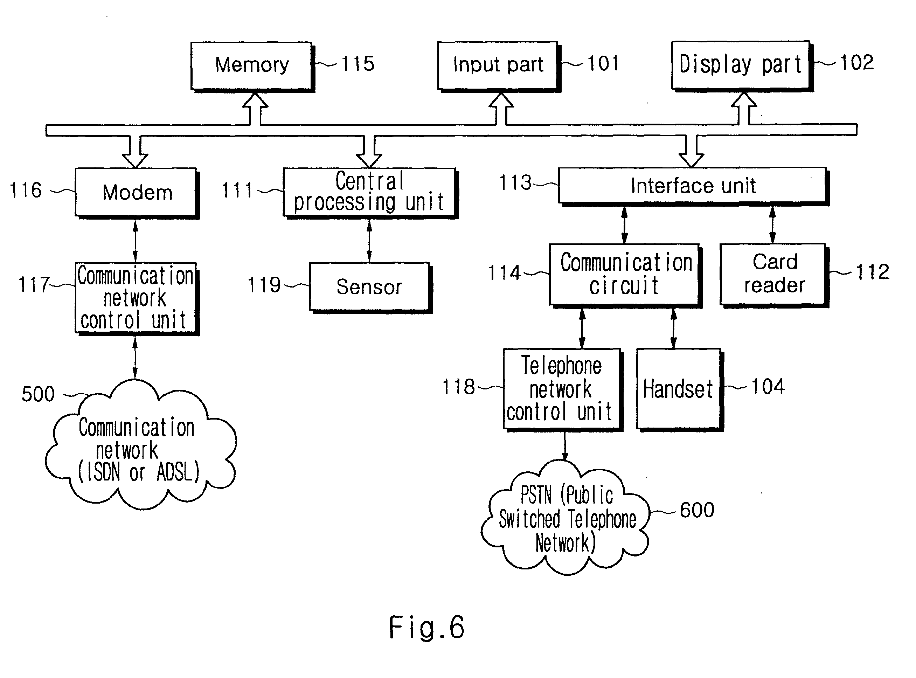

Fig. 6 is a block diagram of the interior construction of a public telephone according to a second preferred embodiment. The second embodiment is identical with the first embodiment, besides a sensor 119, which is installed at a predetermined location of the front of the public telephone 100 to sense the user approaching within a given distance from the public telephone 100 and to transfer sensed signal to the central processing unit 111.

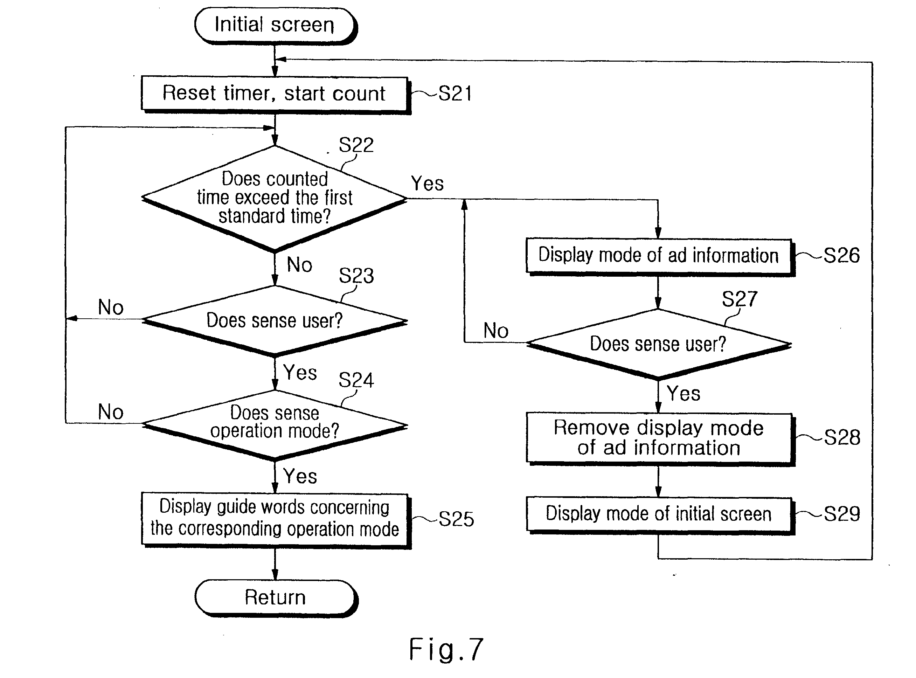

Referring to Fig. 7, the operation of the second preferred embodiment will now be described as follows. First, after resetting the timer, the central processing unit 111 starts count (Step S21). After that, the central processing unit 111 checks whether or not the counted time by the timer exceeds the preset standard time (Step S22). If it is judged that the counted time does not exceed the standard time, the central processing unit 111 checks whether or not the user is sensed by the sensor 119 (Step S23). Here, if the user is not sensed, the central processing unit 111 returns to the step S22 and continuously checks whether or not the counted time by the timer exceeds the standard time.

In the step S23, if it is judged that the user is sensed, the central processing unit 111 checks whether or not telephone mode is sensed (Step S24).

In the step S24, if the telephone mode is sensed, the central processing unit 111 detects guide words concerning the present telephone mode stored in the memory 115, controls the display part 102 to display the corresponding guide words and to convert into the corresponding telephone mode (Step S25).

In the step S24, if it is judged that telephone mode is not sensed, the central processing unit 111 returns to the step S22 and continuously checks whether or not the counted time by the timer exceeds the standard time. In the step S22, if it is judged that the counted time by the timer exceeds the standard time, the central processing unit 111 judges that the public telephone 100 does not perform telephone mode during the preset standard period of time, detects advertisement information stored in the memory 115 and controls the display part 102 to convert into display mode of advertisement information for displaying the detected advertisement information (Step S26). After that, the central processing unit 111 checks whether or not the user is sensed by the sensor 119 (Step S27). If the user is not sensed, the central processing unit 111 continuously displays advertisement information. If the user is sensed, the central processing unit 111 removes display mode of advertisement information (Step S28) and converts into display mode of initial screen for displaying the preset initial screen (Step S29). After returning to the step S21, the central processing unit 111 performs all the above steps after the step S21 repeatedly. Here, the initial screen means a state that all modes are displayed on the display part 102 for allowing the user to select services provided from the public telephone 100.

### Embodiment 3

In a third preferred embodiment of the present invention, the construction of hardware is identical with that of the second embodiment. However, the third embodiment differs from the second embodiment in the converting method of advertisement mode by sensing the user's approach through the sensor 119.

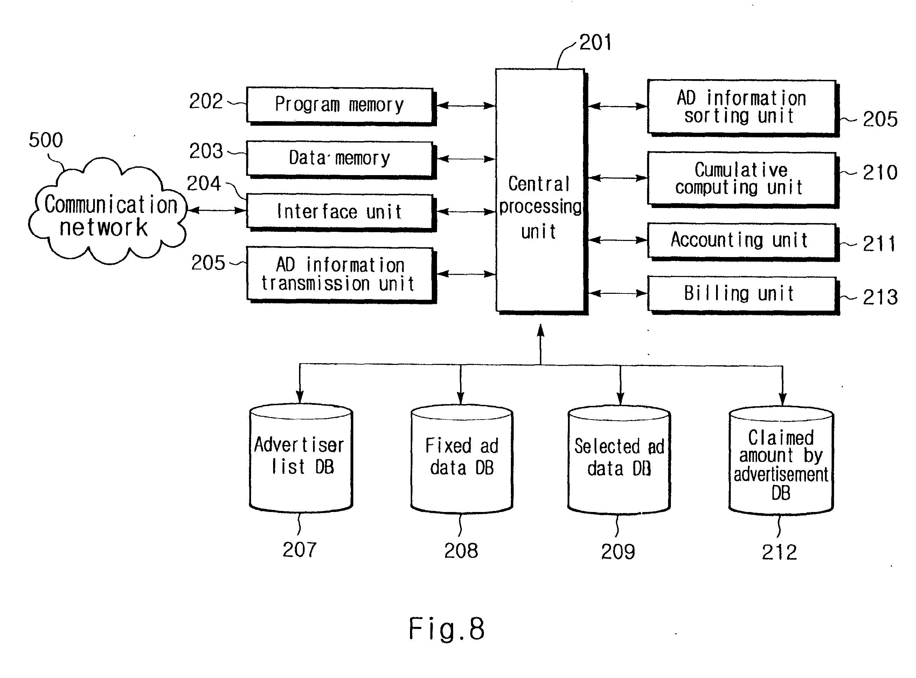

Referring to Fig. 8, the operation of the present invention according to the third embodiment will now be described as follows. First, the central processing device 111 checks whether or not telephone mode is sensed (Step S30). If it is judged that telephone mode is sensed, the central processing unit 111 converts the public telephone 100 into an operation state of the corresponding telephone mode (Step S31).

After that, the central processing unit 111 operates the sensor 119 to sense whether or not the user exists near the public telephone. At this time, the central processing unit 111 checks whether or not the user is separated from the public telephone 100 before the corresponding mode of the public telephone 100 is finished (Step S32). If the user is separated from the public telephone 100, the central processing unit 111 resets the timer and start count (Step S33). After that, the central processing unit 111 checks whether or not the counted time exceeds the preset standard time (Step S34). If the counted time exceeds the standard period of time, the public telephone 100 stops the present mode and is converted into display mode of advertisement information (Step S35). After that, the central processing unit 111 checks whether or not telephone mode is sensed (Step S36). If telephone mode is sensed, the central processing unit 111 removes display mode of advertisement information (Step S37) and returns to the step S31, and then, performs all the above steps after the step S31 repeatedly.

### Embodiment 4

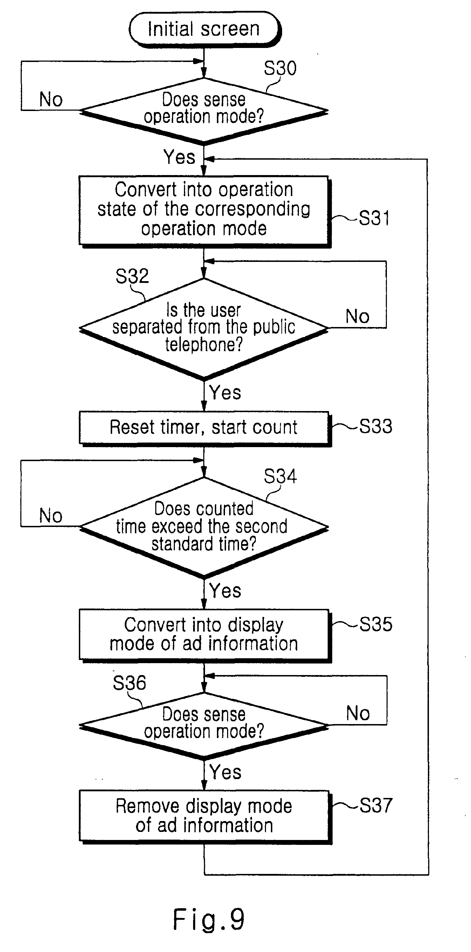

Referring now to Figs. 9 to 12, free-call or discounted-call service system of the public telephone according to the advertising method of the present invention will be described hereinafter in more detail.

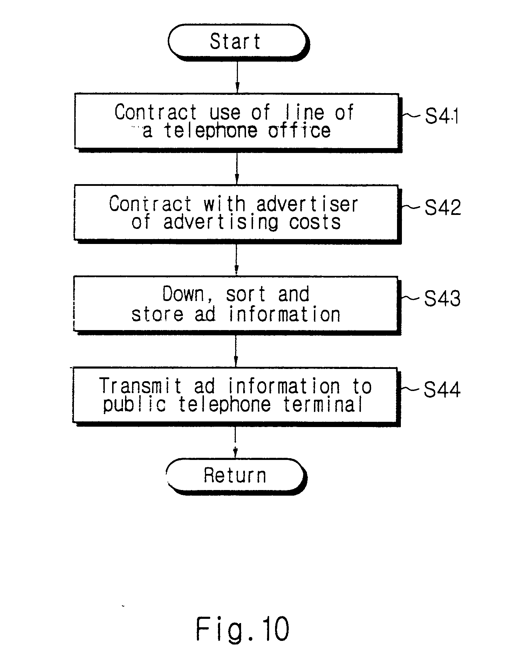

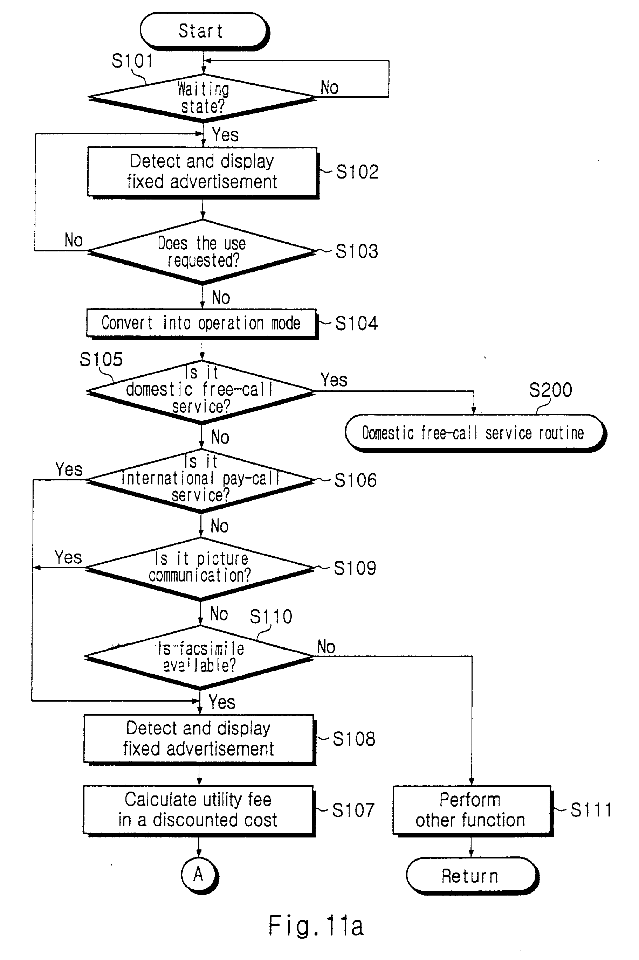

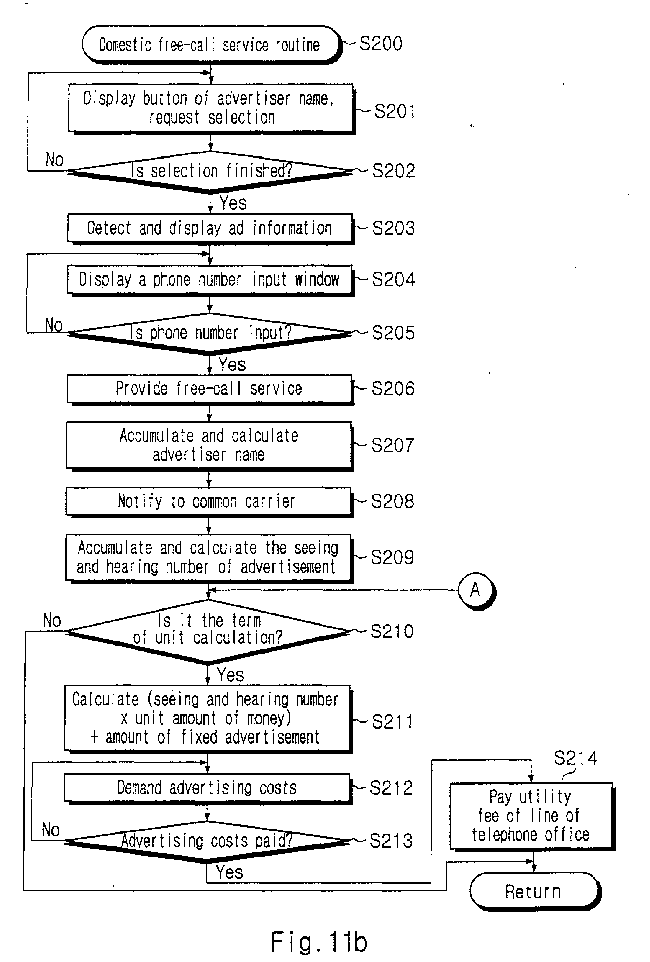

Fig. 9 is a schematic block diagram of the inside of the relay server of Fig. 2. Fig. 10 is a flow chart showing a process of contract between a common carrier and an advertiser or an Internet service provider and communication line provider. Fig. 11 is a flow chart showing a process for providing call service according to the present invention. Figs. 12a to 12h are views showing display state of the display unit of the public telephone applied to the present invention. First, referring to Figs. 2 to 9, the construction of the present invention will be described as follows. The relay server 210 is connected to the public telephone terminal 100, the advertiser server 400b and the communication line provider (office line exchanger 300). At this time, the communication line provider 300 provides telephone line and communication line previously installed at the relay server 200. The advertiser server 400b or the Internet information server 400a provides advertisement information to the relay server 200. The relay server 200 downloads advertisement information to the public telephone terminal 100. The public telephone terminal 100 stores the downloaded advertisement information. According to the user's request, the public telephone terminal 100 displays the stored advertisement information on the display part, and at the same time, counts the seeing and hearing number of advertisement by advertiser and provides information of the seeing and hearing number of advertisement to the relay server 200.

The relay server 200 calculates advertising costs through information of the seeing and hearing number of advertisement provided from the public telephone terminal 100. The relay server 200 sorts the advertising costs by advertiser and transmits bill of the advertising costs to the advertiser server 400b or the Internet information server 400a. The advertiser server 400b or the Internet information server 400a pays the advertising costs to the relay server 200 in a proper way such as electronic money or credit card. Furthermore, the relay server 200 pays a fixed amount of money of the communication line utility to the communication line provider 300.

The public telephone terminal 100 is connected to the communication network 500 and displays various advertisement information provided from the advertiser server 400b or the Internet information server 400a in a specified form. Moreover, the public telephone terminal 100 allows performing various services, i.e., domestic free-call service, international pay-call service, picture communication, e-mail transmission, facsimile transmission and Internet search.

Meanwhile, the construction of the relay server 200 will be described referring to Fig. 10. A central processing unit 201 controls all parts of the relay server 200 according to program stored in a program memory 202 and manages generally the operation of the relay server 200. The program memory 202 stores program related to the operation of the central processing unit 201. A data memory 203 stores temporary data produced by the operation of the relay server 200. An interface unit 204 interfaces the relay server 200 and the communication network 500.

Meanwhile, an advertisement information transmission unit 205 downloads advertisement information provided from the advertiser server 400b or the Internet information server 400a to the public telephone terminal 100. An advertisement information sorting unit 206 sorts advertisement information provided from one or more advertiser servers 400b or Internet information server 400a by name of advertiser and stores them in an advertiser list DB 207, a fixed advertisement DB 208 and a selected advertisement DB 209 respectively.

A cumulative computing unit 210 cumulatively calculates the seeing and hearing number of advertisement information of advertisement by advertiser provided from the public telephone terminal 100. An accounting unit 211 multiplies the claimed amount of selected advertisement by advertiser stored in a claimed amount DB 212 and the seeing and hearing number of advertisement calculated by the cumulative computing unit 210. After that, the accounting unit 211 detects monthly advertising costs of the term of a contract and calculates the claimed amount by corresponding advertisement. A billing unit 213 transmits the claimed amount by advertisement calculated by the accounting unit 211 to the corresponding advertiser server 400b or Internet information server 400a to demand payment of the advertising costs.

Referring to Figs. 10 to 12, the operation of the present invention will now be described as follows.

First, the common carrier contracts with the communication line provider 300 in connection with utility fee of line in a specified period of time unit (Step S41). The advertiser stores its own advertisement in the advertiser server 400b or the Internet information server 400a. At this time, the common carrier makes a contract in different advertising costs with the advertiser of selected advertisement displayed according to the user's selection and with the advertiser of fixed advertisement fixedly displayed on the public telephone terminal 100 (Step S42). At this time, in connection with the selected advertisement, contract may be made according to the user's seeing and hearing number of advertisement, and in connection with the fixed advertisement, contract may be made in a specified term. The contracted advertiser can transmit advertisement information stored in the advertiser server 400b or the Internet information server 400a through the communication network 500 to the relay server 200. At this time, the advertiser may store advertisement information stored in the advertiser server 400b or the internet information server 400a or advertisement information, which is not yet stored in the advertiser server 400b or the Internet information server 400a, in a storage medium, for example, CD-ROM, to provide to the common carrier.

The advertisement information sorting unit 206 of the relay server 200 sorts advertisement information by advertiser list, fixed advertisement and by selected advertisement. The sorted information is stored in the advertiser list DB 207, the fixed ad data DB 208 and the selected ad data DB 209.

The DBs 207, 208 and 209 have name of advertiser, information of fixed advertisement and information of selected advertisement respectively (Step S43).

The relay server 200 downloads advertisement information previously stored in the public telephone terminal 100 installed at unspecified location through the advertisement information transmission unit 205 and the interface unit 204. Advertisement information provided form the advertiser server 400b or the Internet information server 400a is stored in the public telephone terminal 100 (Step S44).

After that, a method for providing call service according to the present invention will now be described referring to Fig. 11. Fig. 11a is a flow chart showing a process for performing call service of the public telephone terminal. Fig. 11b is a flow chart of routine of free-call service of Fig. 11 a. First, if the public telephone terminal 100 is in waiting state (Step S101), the central processing unit 111 detects fixed advertisement information from the previously stored advertisement information and displays in order on an A area of the display part of the public telephone terminal as shown in Fig. 12a, and at the same time, displays guide words requesting the user to touch a certain area displaying advertisement to use the public telephone terminal 100 (Step S102).

After that, if the user touches the certain area displaying advertisement by approaching the public telephone terminal 100 or uses the public telephone terminal 100 by picking up the handset from the hook (Step S103), the public telephone terminal 100, as shown in Fig. 12b, displays various function buttons, i.e., domestic free-call service, international pay-call service, picture communication, e-mail transmission, facsimile transmission and Internet search, and is converted to telephone mode that displays guide words requesting the user to select one of the function buttons (Step S104). At this time, an area (B area) for displaying banner advertisement is provided on the upper portion of the display part of the public telephone terminal. The fixed advertisement previously stored is displayed on the B area in order.

If the user selects the domestic free-call service (Step S105), the public telephone terminal 100 progresses to a domestic free-call service routine shown in Fig. 11a (Step S200). As shown in Fig. 12c, a display window, on which name buttons of advertisers contracted in connection with selected advertisement are arranged, is displayed, and at the same time, guide words requesting the user to select desired advertiser name buttons of the displayed buttons (Step S201). Moreover, the B area displaying banner advertisement continuously displays display state of fixed advertisement previously stored.

If the user selects the advertiser name buttons in order (Step S202), the public telephone terminal 100, as shown in Fig. 12d, detects advertisement information provided from the advertiser server 400b or the Internet information server 400a selected by the user and displays them on a C area in order (Step S203). At the same time, the public telephone terminal 100 displays a phone number input window for allowing the user to input phone number (Step S204). After that, if the user inputs phone number (Step S205), the public telephone terminal 100 is connected to the common carrier 300 through the communication network 500. The public telephone terminal 100 calls the party's phone number requested by the user using the line provided by the communication line provider 300 and then the free-call service is provided to the user (Step S206).

Furthermore, the public telephone terminal 100 counts the selected number of the corresponding advertiser name selected by the user and cumulatively calculates (Step S207). Information of the seeing and hearing number of advertisement cumulatively calculated is periodically notified to the relay server 200 in a given period of time unit, for example, by day (Step S208).

The relay server 200 provides information of the seeing and hearing number of advertisement provided from the public telephone terminal 100 to the cumulative counting unit 110 according to program stored in the program memory 202 to cumulatively calculate the seeing and hearing number of advertisement (Step S209). After that, if the expiration date of the contract made with the advertiser and with the communication line provider 300 (Step S210), the relay server 200 detects information of the seeing and hearing number of advertisement accumulated in the cumulative counting unit 110 and detects the claimed amount by advertisement from the claimed amount DB 212. The accounting unit 211 multiplies the claimed amount by advertisement and the detected seeing and hearing number of advertisement to calculate advertising costs of the selected advertisement. The accounting unit 211 calculates total claimed amount by advertiser including advertising costs of fixed advertisement previously contracted (Step S211). The billing unit 213 demands advertising costs to the advertiser server 400b or the Internet information server 400a (Step S212).

If the advertiser pays the advertising costs and the advertiser server 400b or the Internet information server 400a transfers a notice of payment of the advertising costs (Step S213), the relay server 200 confirms receipt of the payment and pays previously contracted utility fee of line to the communication line provider 300 (Step S214).

Moreover, if the user selects button of international pay-call service from the display state of the display part of the public telephone terminal 100 shown in Fig. 12b (Step S106), the display state is directly converted into a screen state of Fig. 12d without displaying a screen state of Fig. 12c for selection of advertiser. At this time, the public telephone terminal 100 detects banner advertisement and fixed advertisement to be displayed on the B area and the C area in the screen state of Fig. 12d and banner advertisement and fixed advertisement detected is displayed in order (Step S107). Moreover, the public telephone terminal 100 calculates utility fee discounted at a regular rate from its real utility fee based on the communication period of time by payment means presented by the user (Step S108).

After that, the step S108 moves to the step S210 of Fig, 11b and performs all steps after the step S210 repeatedly. In other words, if the common carrier sets the utility fee of the international pay-call service per unit hour in low price in consideration of income of the advertising costs, as previously described, the user can be benefited by discount of the fee for telephone call while watching banner advertisement and fixed advertisement displayed on the display part of the public telephone terminal 100.

Furthermore, if the user selects a button of picture communication from the display state of the display part of the public telephone terminal 100 shown in Fig. 12b (Step S109), the display part is directly converted into a screen state of Fig. 12e without displaying the screen state of Fig. 12c for allowing the user to select the advertiser. At this time, the public telephone terminal 100 detects banner advertisement and fixed advertisement to be displayed on the B and C areas in the screen state of Fig. 12e and displays the banner advertisement and fixed advertisement in order (Step S107). Here, if the user selects a button of picture connection from the display state of Fig. 12e, the display part of the public telephone terminal is converted into a screen state of Fig. 12f, and at this time, the B area displays only banner advertisement.

Therefore, as previously described, the public telephone terminal 100 calculates utility fee discounted at a regular rate from its real utility fee based on the communication period of time by payment means presented by the user (Step S108). After that, the step S108 moves to the step S210 of Fig. 11b and performs all steps after the step S210 repeatedly. In other words, if the common carrier sets the utility fee of the international pay-call service per unit hour in low price in consideration of income of the advertising costs, as previously described, the user can be benefited by discount of the fee for telephone call while watching banner advertisement and fixed advertisement displayed on the display part of the public telephone terminal 100.

Furthermore, if the user selects a button of facsimile function from the display state of the display part of the public telephone terminal 100 shown in Fig. 12b (Step S110), the public telephone terminal 100 displays a scan screen of Fig. 12g and a facsimile number input screen of Fig 12h on the display part of the public telephone terminal in order. At this time, the public telephone terminal 100 detects banner advertisement and fixed advertisement to be displayed on the B area in the screen of Fig. 12g and on B and C areas in the screen state of Fig. 12h and displays the banner advertisement and fixed advertisement in order (Step S107). Therefore, as previously described, the public telephone terminal 100 calculates utility fee discounted at a regular rate from its real utility fee based on the using period of time of communication by payment means presented by the user (Step S108).

After that, the step S108 moves to the step S210 of Fig. 11b and performs all steps after the step S210 repeatedly. In other words, if the common carrier sets the utility fee of the facsimile service per unit hour in low price in consideration of income by the advertising costs, as previously described, the user can be benefited by discount of the fee for telephone call while watching banner advertisement and fixed advertisement displayed on the display part of the public telephone terminal 100.

If the user does not select the button of facsimile function in the step S110, the public telephone terminal 100 judges that the user selects other function and performs other function of public telephone terminal 100 (Step S111).

According to the present invention, the advertising method using the public telephone and the method for using free-call service by the advertising method has several advantages as follows. That is, by displaying advertisement through the large-sized display device of the multifunctional public telephone installed at unspecified area, advertiser can be provided with advertising effect of high level in low price.

Furthermore, as advertisement information is downloaded, renewed and stored in the preset regular period of time by communication with the server through the communication line, advertisement information of a new version can be provided conveniently and rapidly.

Moreover, if the user approaches within the given distance from the public telephone or is separated from the public telephone, the public telephone is automatically converted from advertisement mode to telephone mode or to the contrary, so that the user can convert the public telephone to advertisement mode or to telephone mode without any manipulation.

Additionally, as the advertiser can continuously display advertisement on the public telephone terminal through the common carrier's server in low price, the advertiser can have advertising effect with low price and the user can be provided with domestic free-call service, discounted international phone-call service or additional services if watching certain advertisement. As obtaining incomes by advertisement, the common carrier can provide call services with low price, and thus the present invention can provide services that satisfy both the advertiser and the user.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. An advertising method using a public telephone, which connects to a relay server through a communication network and downloads advertisement information from the relay server to perform display of advertisement, the method comprising:
a step of checking standard time that counts a waiting period of time of the public telephone and checks whether or not the counted time exceeds a preset standard time;
a step of performing telephone mode that, if telephone mode is sensed during the standard time checking step, detects a predetermined guide information concerning the telephone mode, displays the guide information on a display device of the public telephone and, at the same time, converts into the telephone mode to perform telephone function;
a step of performing advertisement mode that, as the result of the standard time checking step, if telephone mode is not sensed until the counted time exceeds the standard period of time, detects predetermined advertisement information previously stored and displays it on the display device; and
a step of converting to telephone mode that, if the telephone mode is sensed during the advertisement mode performing step, removes the advertisement mode, displays the guide information concerning the telephone mode and, at the same time, converts to the telephone mode.

2. The advertising method as claimed in claim 1, wherein the relay server is connected to an Internet information server or an advertiser server and provided advertisement information from the Internet information server or the advertiser server.

3. An advertising method using a public telephone, which connects to a relay server through a communication network and downloads advertisement information from the relay server in a predetermined period of time to perform display of advertisement, the method comprising:
a step of counting the predetermined period of time and checking whether the counted time exceeds a preset standard time;
a step of connecting the public telephone through the communication network to the relay server if the counted time exceeds the standard time;
a step of checking whether renewed advertisement information exists in the relay server; and
a step of replacing advertisement information previously stored in the public telephone with renewed advertisement information if renewed advertisement information exists in the relay server.

4. The advertising method as claimed in claim 3, wherein the relay server is connected to an Internet information server or an advertiser server and provided advertisement information from the Internet information server or the advertiser server.

5. The advertising method as claimed in claim 3, further comprising:
a step of checking standard time that counts a waiting period of time of the public telephone and checks whether or not the counted time exceeds a preset standard time;
a step of performing telephone mode that, if telephone mode is sensed during standard time checking step, detects a predetermined guide information concerning the telephone mode, displays the guide information on a display device of the public telephone and, at the same time, converts to the telephone mode to perform telephone function;
a step of performing advertisement mode that, as the result of the standard period of time checking step, if telephone mode is not sensed until the counted time exceeds the standard period of time, detects predetermined advertisement information previously stored and displays it on the display device; and
a step of converting to telephone mode that, if the telephone mode is sensed during the advertisement mode performing step, removes the advertisement mode, displays the guide information concerning the telephone mode and, at the same time, converts into the telephone mode.

6. An advertising method using a public telephone, which connects to a relay server through a communication network, downloads advertisement information from the relay server to perform display of advertisement, the public telephone being installed at an unspecified location and having a sensor for sensing a user being within a sensing range, the method comprising:
a step of checking standard time that counts a waiting period of time of the public telephone and checks whether or not the counted time exceeds a preset standard time;
a step of performing telephone mode that, if telephone mode is sensed during standard time checking step, detects a predetermined guide information concerning the telephone mode, displays the guide information on a display device of the public telephone and, at the same time, converts to the telephone mode to perform telephone function;
a step of performing advertisement mode that, as the result of the standard period of time checking step, if telephone mode is not sensed until the counted time exceeds the standard period of time, detects predetermined advertisement information previously stored and displays it on the display device;
a step of converting to telephone mode that, if the telephone mode is sensed during the advertisement mode performing step, removes the advertisement mode, displays the guide information concerning the telephone mode and, at the same time, converts into the telephone mode; and
a step of converting to initial mode that, if the sensor senses the user's approaching during the advertisement mode performing step, removes the advertisement mode and initializes to display an initial screen previously set in the display device.

7. The advertising method as claimed in claim 6, wherein the initial screen mode is in a state that various service modes provided from the public telephone is displayed on the display device.

8. An advertising method using a public telephone, which connects to a relay server through a communication network, downloads advertisement information from the relay server to perform display of advertisement, the public telephone being installed at an unspecified location and having a sensor for sensing a user being within a sensing range, the method comprising:
a step of performing telephone mode if the telephone mode is sensed;
a step of checking through the sensor whether or not the user is separated from the public telephone;
a step of counting period of time from the time of the user's separation if the user is separated from the public telephone and checking whether or not the counted time exceeds a preset standard time;
a step of performing advertisement mode that, if the counted time exceeds the standard time, detects previously stored advertisement information and displays it on a display device of the public telephone; and
a step of converting that, if the telephone mode is sensed during the advertisement mode, removes the advertisement mode and converts to an operation state corresponding to the telephone mode.

9. A system for providing advertisement and call service using a public telephone, in which a public telephone terminal, a relay server storing advertisement information including advertiser name, an advertiser server and an internet information server for providing advertisement information to the relay server and communication line provider providing a communication network to the relay server according to a contract of line use with the relay server are connected together through a communication line, wherein the public telephone terminal comprising:
means for downloading and displaying a number of advertiser names registered in the relay server if a user requests a request signal of free-call;
means for counting the selected number of each advertiser name if the user selects the advertiser names over predetermined number of the plurality of advertiser names displayed on the advertiser display means, cumulatively calculating and, at the same time, detecting and displaying the previously registered advertisement information corresponding to the selected advertiser names; and
means for providing call service if the advertiser names over the predetermined number are selected.

10. The system as claimed in claim 9, wherein the relay server includes:
an advertisement information transmission unit for transmitting advertisement information provided from the advertiser server to the public telephone terminal;
an advertisement information sorting unit for sorting advertisement information provided from the advertiser server into advertiser list, fixed advertisement information and selected advertisement information and storing them in an advertiser list DB, a fixed ad data DB and a selected ad data DB respectively;
a cumulative computing unit for accumulating information of the seeing and hearing number of advertisement provided from the public telephone terminal and calculating total seeing and hearing number of advertisement;
an accounting unit for calculating claimed amount of advertising costs corresponding to the computed seeing and hearing number;
a billing unit for demanding the claimed amount by advertisement, which is calculated by the accounting unit, to the advertiser server or the internet information server; and
a central processing unit for controlling all the units,
wherein the central processing unit divides advertisement information provided from the advertiser server into fixed advertisement and selected advertisement, contracts and demands utility fee in a specified period of time unit in connection with the fixed advertisement; and contracts and demands claimed amount by unit according to the seeing and hearing number of advertisement corresponding to the selected advertiser list of various advertiser lists displayed on the public telephone terminal in connection with the selected advertisement;
and wherein the accounting unit, after multiplying the claimed amount by unit according to the seeing and hearing number of the corresponding advertisement, demands amount of money adding contracted payment of fixed advertisement.

11. The system as claimed in claim 9, wherein the call service is free-call service.

12. The system as claimed in claim 9, wherein the call service is discounted call service.
